# EUROPÄISCHE PATENTANMELDUNG

(11) **EP 0 823 819 A2**
(43) Veröffentlichungstag der Anmeldung: **11.02.1998**
(21) Anmeldenummer: 97440064.0
(22) Anmeldetag: 07.08.1997
(51) Int. Cl.: H04N 7/14

(54) **Digitaler ISDN-Video-Server**

(30) Priorität: 08.08.1996 DE 19631939
(71) Anmelder: ALCATEL ALSTHOM COMPAGNIE GENERALE D'ELECTRICITE, 75008 Paris (FR)
(72) Erfinder: Sauer, Peter, Dr., 71254 Ditzingen (DE)
(74) Vertreter: Schätzle, Albin, Dipl.-Phys.

(57) **Zusammenfassung**

Schaffung eines digitalen ISDN-Video-Servers für Verteildienste und interaktive Dienste in der Bildtelefonie, der universell für eine große Anzahl, auch unterschiedlich ausgestalteter Bildtelefone anwendbar ist.

Bereitstellung von Bild- und Tonsignalen verschiedener Formate und verschiedener Übertragungsraten für unterschiedliche Bildtelefone.

Im Server wird eine Endgerätesignalisierung (TN 1, ..., TN p) für jeweils ein anforderndes Bildtelefon durchgeführt, wobei entsprechend der Ausführung des Bildtelefons, codierte Bild- und Tonsignale unterschiedlicher Übertragungsraten und unterschiedlichen Formates bereitgestellt werden. Diese stehen entweder in Echtzeit zur Verfügung oder werden aus entsprechenden Speichermedien geladen. Zusätzlich ist auch noch eine interaktive Steuerung realisierbar.

## Beschreibung

Die Erfindung betrifft einen digitalen ISDN-Video-Server, der einen Datenstrom aus codierten Bild- und Tonsignalen bereitstellt.

Aus der ITU-T Empfehlung H.331 ist ein Verteildienst für Bildtelefone bekannt. Genauer gesagt wird hierin die Funktionalität für den Verteildienst (Broadcast-Dienst) definiert. Bei einem solchen Verteildienst ist das Codierverfahren, in dem die Bild- und Tonsignale codiert werden, festgelegt. Ebenfalls festgelegt sind die Signalisierungsparameter.

Ebenfalls aus dem Stand der Technik ist ein sogenannter Videophoneserver bekannt. Dieser ISDN-Server bietet einem Anrufenden eine Vielzahl von Diensten. Ein Anrufer ruft über ein gewöhnliches ISDN-H.320 Videophon den ISDN-Server an und kann Informationen auswählen. Hierbei werden bis zu 1000 verschiedene Dienste angeboten. Dieser Videophoneserver stellt 9 x 2 B-Kanäle zur Verfügung.

Ebenfalls bekannt ist die Funktion des Speicherns der ankommenden Information. Damit wird ein aktuell zu übertragendes TV-Programm gespeichert und kann zeitverzögert gesendet werden. Demgemäß kann ein Anrufender entweder vorher abgespeicherte Nachrichten abfragen oder in Echtzeit übertragene Nachrichten abrufen.

In einer größeren Version dieses Videophoneservers können 15 x 2 Kanäle vorhanden sein. Nachteilig bei einem solchen Server erweist sich, daß lediglich 30 Videotelefone gleichzeitig auf den Server zugreifen können und daß nur Videotelefone, die nach dem H.320 Videostandard arbeiten, auf diesen Server Zugriff erhalten können (aus: Interactive Videotelefonie, von: Firmenprospekt der Firma Telsis, Copyright, Telsis 1995, erhalten auf CeBit '96).

Es ist Aufgabe der vorliegenden Erfindung, einen Videoserver zu schaffen, der in der Lage ist, Videotelefone unterschiedlicher Ausgestaltung zu bedienen. Eine weitere Aufgabe der Erfindung ist es, einer Vielzahl von Teilnehmern Zugriff auf den ISDN-Server zu gewährleisten.

Dies wird erfindungsgemäß gelöst durch die Lehre des Patentanspruchs 1.

Vorteilhaft erweist sich hierbei, daß ein kostengünstiger Videoserver für Bildtelefone unterschiedlicher Ausführungen und Ausgestaltungen geschaffen wird. Demgemäß kann der Videoserver Datenströme für jedes beliebige Bildtelefon liefern und ist somit universell einsetzbar.

Weitere vorteilhafte Ausgestaltungen sind den Unteransprüchen 2 bis.9 zu entnehmen.

Ein besonderer Vorteil ergibt sich hierbei aus den Patentansprüchen 2 und 3, da hierbei zusätzlich gespeicherte, codierte Bild- und Tonsignale unterschiedlicher Formate bereitgestellt werden, und somit einen zeitverzögerten Abruf einer Videonachricht erlauben. Das beinhaltet somit sowohl die Funktion eines Videoanrufbeantworters als auch die eines Videorekorders auf einem Server.

Ein weiterer Vorteil ergibt sich gemäß Patentanspruch 4, welcher dazu führt, daß ein Vorspulen und ein Zurückspulen innerhalb des codierten Datenstromes möglich ist. Somit kann sich eine Passage wiederholt angesehen werden oder aber eine Passage kann durch Vorspulen übersprungen werden.

In vorteilhafter Weise ergibt sich gemäß Patentanspruch 5, daß somit auch eine Vielzahl von Teilnehmern auf einen Datenstrom zugreifen kann.

Ein Vorteil in der Handhabung ergibt sich gemäß Patentanspruch 6, indem eine Tonwahl von dem Bildfernsprecher aus erfolgt, um eine Steuerung des ISDN-Servers vorzunehmen. Dies kann auch über Signalisierung im B-Kanal erfolgen.

Im folgenden wird die Erfindung anhand von Ausführungsbeispielen und der Figuren näher erläutert. Folgende Figuren zeigen:
- Figur 1: Digitaler ISDN-Video-Server zur Bereitstellung von Datenströmen,
- Figur 2: Digitaler ISDN-Video-Server mit einer Speichermöglichkeit für die in Echtzeit bereitgestellten Signale,
- Figur 3: Schematische Darstellung eines Systems unter Verwendung eines ISDN-Video-Servers,
- Figur 4: Darstellung von codierten Datenströmen für einen interaktiven Zugriff.

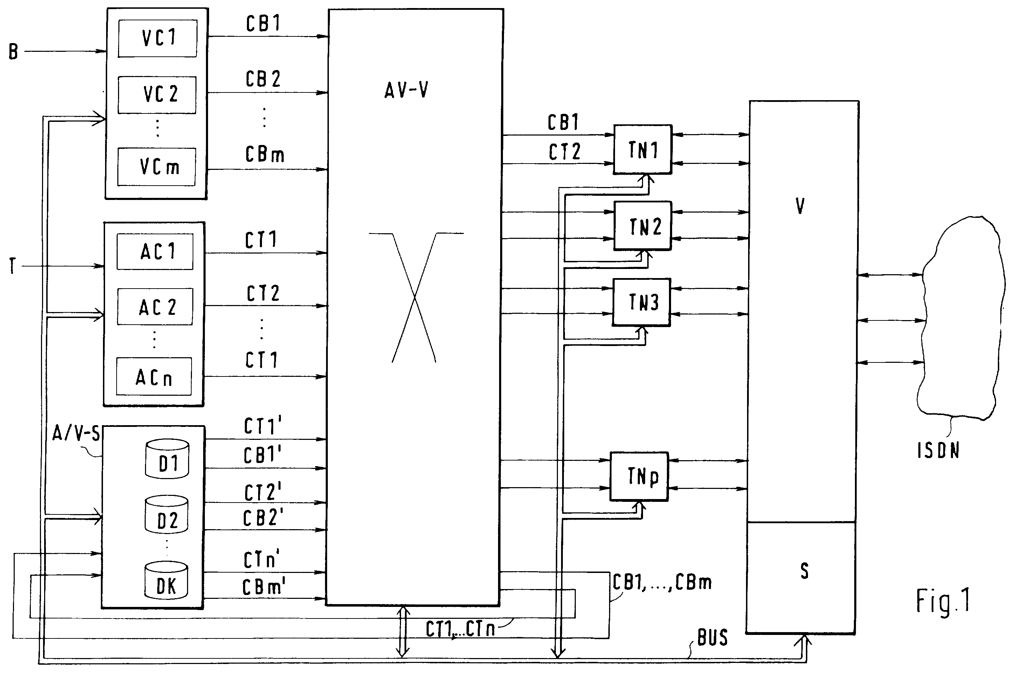

Im folgenden wird anhand von Figur 1 die Erfindung näher erläutert. Ein digitaler ISDN-Video-Server zur Bereitstellung von Datenströmen aus codierten Bild- und Tonsignalen CB1,CB2,...,CBm,CT1,CT2,...,CTn für Bildtelefone unterschiedlicher Ausgestaltung weist eine Vielzahl von Videocodern VC1,VC2,...,VCm und eine Vielzahl von Audiocodern AC1,AC2,...,ACn auf. Die Videocoder und die Audiocoder dienen zur Echtzeitcodierung von uncodierten Bild- bzw. Tonsignalen B, T. Die Vielzahl von Videocodern und die Vielzahl von Audiocodern dienen dazu, codierte Bild- und Tonsignale CB1,CB2,...,CBm,CT1,CT2,...,CTn bereitzustellen.

Ebenfalls weist der digitale ISDN-Video-Server eine Vermittlungseinheit V zur Durchführung einer Netzwerksignalisierung und zur Herstellung einer Verbindung zwischen den Bildtelefonen unterschiedlicher Ausgestaltung und dem digitalen ISDN-Video-Server auf. Über die Vermittlung V treffen Anrufe eines Bildfernsprechers über das ISDN-Netz auf dem digitalen ISDN-Video-Server ein, welche dann zu Mitteln TN1,...,TNp zur Signalisierung jeweils eines Bildtelefons vermittelt werden. Die Vermittlung V kann beispielsweise eine sein, die gemäß der 1.400-Serie arbeitet. Die Mittel TN1,..., TNp zur Signalisierung jeweils eines Bildtelefons bestimmen die von den jeweiligen Bildtelefonen verarbeitbaren codierten Bild- und Tonsignale CB1,CB2,...,CBm,CT1,CT2,...,CTn. Ebenfalls dienen die Mittel TN1,...,TNp zum Multiplexen oder Demultiplexen der codierten Bild- und Tonsignale jeweils für ein Bildtelefon und zur Durchführung einer Fehlerkorrektur jeweils für ein Bildtelefon. Die Endgerätesignalisierung kann beispielsweise nach dem H.242-ITU-Standard durchgeführt werden. Der Multiplexer und Demultiplexer kann beispielsweise nach dem H.221-ITU-Standard ausgeführt sein, und die Fehlerkorrektur kann nach dem H.261 ITU-Standard ausgeführt sein. Jedes Mittel TN1,...,TNp zur Signalisierung ist mit der Vermittlung V verbunden.

Desweiteren weist der digitale ISDN-Video-Server ein Koppelfeld AV-V zum Schalten der codierten Bild- und Tonsignale auf die Mittel zur Signalisierung auf. Dieses Koppelfeld, welches zur Audio/Video-Verteilung dient, ist dergestalt ausgebildet, daß es die codierten Bildsignale CB1,CB2,...,CBm empfängt, ebenso wie die codierten Tonsignale CT1,CT2,...,CTn. Die codierten Bild- und Tonsignale sind, wie bereits zuvor erläutert, in unterschiedlichen Formaten vorliegend, das bedeutet, daß die Bild- und Tonsignale unterschiedlich codiert sind und mit einer unterschiedlichen Ubertragungsrate übertragen werden können. Das Koppelfeld AV-V schaltet die gemäß der Signalisierung bestimmten codierten Bild- und Tonsignale auf die Mittel TN1,...,TNp zur Signalisierung. Hierbei ist beispielsweise auf das erste Mittel zur Signalisierung TN1 ein erstes codiertes Bildsignal CB1 und ein zweites codiertes Tonsignal CT2 aufgeschaltet. Auf das zweite Mittel zur Signalisierung TN2 ist gleichfalls das erste codierte Bildsignal CB1 und beispielsweise das erste codierte Tonsignal CT1 aufgeschaltet. Hierbei ist beliebige Konstellation entsprechend der verarbeitbaren Bild- und Tonsignale möglich.

Weiterhin ist in dem digitalen ISDN-Video-Server eine Steuerung S zur Steuerung der Bereitstellung des Datenstromes vorhanden. Die Steuerung S ist beispielsweise über ein Bussystem BUS mit jedem Mittel TN1,...TNp zur Signalisierung verbunden, ebenso wie mit dem Koppelfeld AV-V und ebenfalls mit der Vielzahl von Videocodern VC1,VC2,...,VCm und mit der Vielzahl von Audiocodern AC1,AC2,...,ACn. Weiterhin ist die Steuerung S direkt mit der Vermittlung V verbunden. Nachdem eine Anforderung eines Bildtelefones bei dem digitalen ISDN-Video-Server eintrifft und auf die Mittel TN1,...,TNp zur Signalisierung gegeben wurde, dient die Steuerung S dazu, die Steuerung der Ausgabe der codierten Bild- und Tonsignale auf die entsprechenden Mittel zur Signalisierung zu steuern. Die Videocoder VC1,VC2,...,VCm können beispielsweise nach dem H.261-ITU-Standard arbeiten. Die Audiocoder AC1,AC2,...,ACn arbeiten beispielsweise nach dem G.71 1 oder dem G.722-Standard. Die gemäß der vorangegangenen Beschreibung erläuterten unterschiedlichen Formate für Bildfernsprecher erlauben die Auswahl einer für einen Teilnehmer geeigneten Signalqualität. Damit ist gewährleistet, daß jeder Teilnehmer über eine optimale Signalqualität in seinem Endgerät verfügen kann.

Zusätzlich in der Figur 1 ausgeführt ist ein Audio-/Videospeicher A/V-S zur Bereitstellung gespeicherter, codierter Bild- und Tonsignale CB1',CB2',...,CBm',CT1',CT2',...,CTn'. Diese gespeicherten, codierten Bild- und Tonsignale liegen ebenfalls in unterschiedlichen Formaten, das heißt, in unterschiedlichen Codierungen vor. Hierzu weist der Audio-/Videospeicher A/V-S eine Vielzahl von Speichern D1,D2...,Dk auf. Diese Speicher können beispielsweise in Form von Plattenspeichern ausgebildet sein. Somit stehen neben den in Echtzeit codierten Audio- und Videosignalen auch Audio- und Videosequenzen vom Speicher in verschiedenen Formaten zur Auswahl. Eine Ausführung dessen ist, daß die in Echtzeit codierten Bild- und Tonsignale zusätzlich auf dem Audio- und Videospeicher A/V-S gespeichert werden. Hierzu werden die in Echtzeit an dem Koppelfeld AV-V anliegenden codierten Bild- und Tonsignale auf den Audio-/Videospeicher geführt, um dort gespeichert zu werden. Somit besteht die Möglichkeit, daß in Echtzeit ankommende Signale aufgezeichnet werden und später abgerufen werden. Eine Verwendungsmöglichkeit für solcherart gespeicherte Bild- und Tonsignale ist beispielsweise bei der Speicherung von Nachrichten zu sehen. Aktuell anliegende Nachrichten, z. B. aus dem Fernsehen kommend, werden auf den digitalen ISDN-Video-Server gegeben, dort gespeichert und können von einem Bildtelefon über ein ISDN-Netz jederzeit abgerufen werden. Bei aktualisierten Nachrichten, die in Form von Bild- und Tonsignalen ankommen, können diese Daten überschrieben werden, wobei ein Teilnehmer eines Bildtelefones jederzeit die Möglichkeit hat, aktualisierte Nachrichten abzufragen. Damit ergibt sich neben der reinen Bildtelefonie, in der direkt mit einem weiteren Teilnehmer kommuniziert wird, auch eine Anwendung, daß eine Bild- und Tonnachricht aufgezeichnet wird und später abgerufen wird. Dies ist die Funktion eines sogenannten Bild-Anrufbeantworfers.

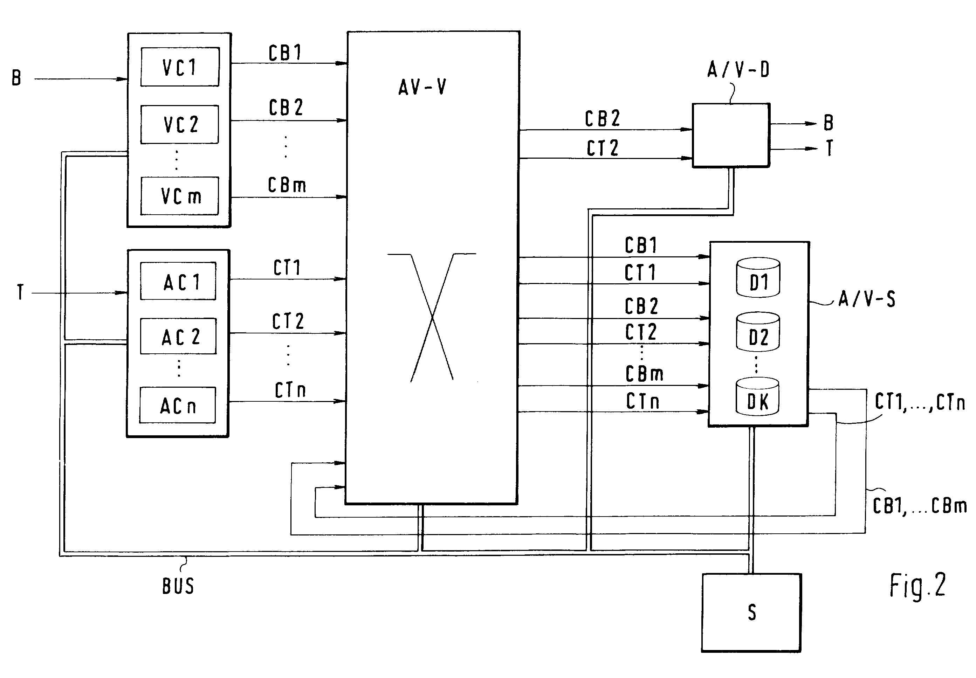

Im folgenden wird anhand von Figur 2 erläutert, wie in Echtzeit anliegende Bild- und Tonsignale gespeichert werden. Ein Bildsignal B und ein Tonsignal T liegen entsprechend an der Vielzahl von Videocodern VC1,VC2,...,VCm und an der Vielzahl von Audiocodern AC1,AC2,...,ACn an. Die Videocoder und die Audiocoder sind jeweils zusammengefaßt dargestellt, da ein ankommendes Bildsignal und ein ankommendes Tonsignal von jedem der Videocoder bzw. von jedem der Audiocoder codiert werden kann. Das Bildsignal B wird von einem der Videocoder codiert, weshalb am Ausgang der Videocoder ein codiertes Bildsignal CB1,CB2,...,CBm anliegt. Ein eintreffendes Tonsignal T wird von einem der Audiocoder codiert, weshalb am Ausgang ein codiertes Tonsignal CT1,CT2,...,CTn anliegt. Diese werden, wie bereits zuvor erläutert, auf das Koppelfeld AV-V gegeben. Wenn nun die Anforderung besteht, daß die codierten Bild- und Tonsignale gespeichert werden, so werden die codierten Bildsignale CB1,CB2,...,CBm und die codierten Tonsignale CT1,CT2,...,CTn auf den Audio-/Videospeicher A/V-S gegeben. Dort werden die eintreffenden codierten Bild- und Tonsignale auf Speichern D1,D2,...,Dk gespeichert. Diese Speicher können beispielsweise Plattenspeicher sein. Die solcherart gespeicherten Bild- und Tonsignale stehen nun dem Koppelfeld AV-V als codierte, gespeicherte Bild- und Tonsignale CT1',CT2',...,CTn',CB1',CB2',...,CBm' zur Verfügung. Somit stehen einem Nutzer des digitalen ISDN-Servers in Echtzeit codierte Bild- und Tonsignale und gespeicherte codierte Bild- und Tonsignale zur Verfügung.

Zur Kontrolle dessen, was aktuell gespeichert wird, werden die codierten Bild- und Tonsignale auf einen Audio-/Video-Decoder A/V-D gegeben. Hier ist beispielsweise ausgeführt, daß das codierte Bildsignal CB2 und das codierte Tonsignal CT2 auf den Audio-/Video-Decoder gegeben wird. Dieses wird also wieder in ein Bild- und Tonsignal B, T, decodiert und wird zur Kontrolle betrachtet. Alle Elemente der Figur 2 sind über eine Steuerung untereinander verbunden. Die Steuerung S ist beispielsweise über einen Bus BUS mit allen Elementen verbunden und steuert die Speicherung der codierten Bild- und Tonsignale.

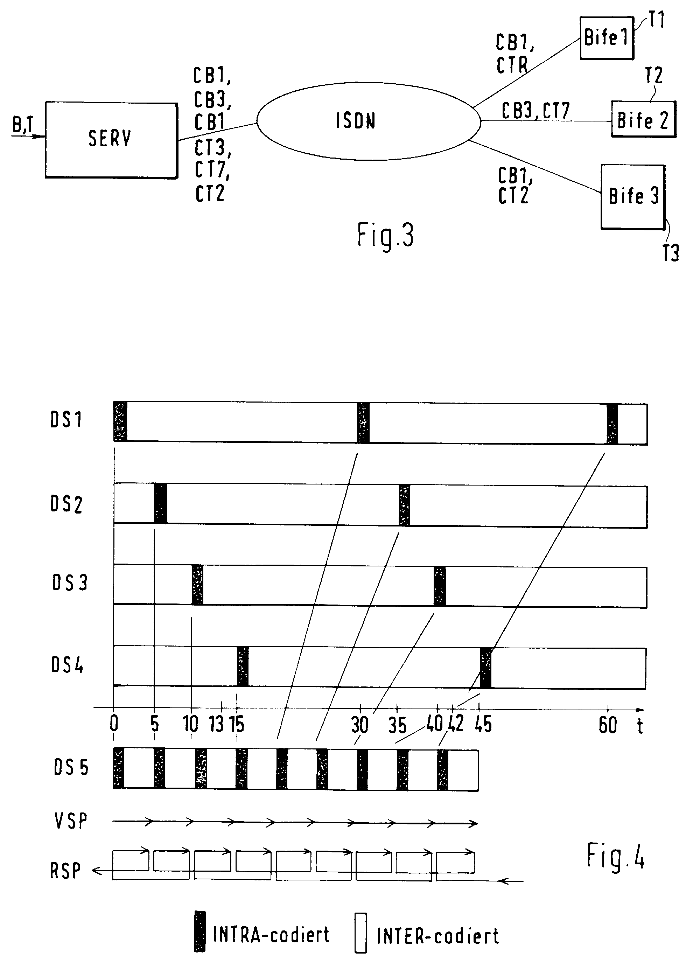

Im folgenden wird anhand von Figur 3 ein Verfahren zur Verwendung des digitalen ISDN-Servers dargestellt. Ein erster Teilnehmer T1 an einem Bildfernsprecher Bifel wählt über ein ISDN-Netz ISDN einen digitalen ISDN-Server SERV an. In dem digitalen ISDN-Server SERV wird gemäß der zuvor erläuterten Mittel festgestellt, welche Signale das Bildfernsprechgerät Bifel verarbeiten kann und ihm wird demgemäß eine geeignete Signalqualität zur Verfügung gestellt. Ein eintreffendes Bild- und Tonsignal B, T, kann, wie bereits zuvor erläutert, in Echtzeit verarbeitet werden oder gespeichert werden und dann zu einem Bildfernsprecher übertragen werden. Ein weiterer, zweiter Teilnehmer T2 ist über ein Bildfernsprechgerät Bife2 ebenfalls mit dem digitalen ISDN-Server SERV verbunden. Ein dritter Teilnehmer T3 ist über ein drittes Bildfernsprechgerät Bife3 über das ISDN-Netz ISDN mit dem digitalen ISDN-Server SERV verbunden. Für die Funktion des sogenannten Verteildienstes werden die anliegenden Bild- und Tonsignale B, T an die drei Bildfernsprechgeräte Bifel, Bife2, Bife3 verteilt. Hierbei ist es möglich, daß diese drei Bildfernsprechgeräte unterschiedlicher Ausgestaltung sind. Unterschiedliche Ausgestaltung bedeutet, daß diese Bildfernsprechgeräte unterschiedliche Codierungen verarbeiten und unterschiedliche Übertragungsraten verarbeiten. Voraussetzung hierbei war, wie bereits bei Figur 1 erläutert, daß für jedes Bildfernsprechgerät einzeln eine Signalisierung durchgeführt wird. Hiermit wird erkannt, welche Codierung und welche Datenübertragung ein Bildfernsprechgerät benötigt, um eine hohe Signalqualität zu haben. Hierbei werden, wie in der Figur 3 dargestellt, beispielsweise von dem digitalen ISDN-Server SERV folgende codierte Bildsignale zur Verfügung gestellt: CB1,CB3,CB1. Ebenfalls zur Verfügung gestellt werden beispielsweise die codierten Tonsignale CT3,CT7,CT2. Diese werden über das ISDN-Netz übertragen, wobei das Bildfernsprechgerät Bifel die codierten Bildsignale CB1 und das codierte Tonsignal CT3 verarbeitet. Das Bildfernsprechgerät Bife2 verarbeitet das codierte Bildsignal CB3 und das codierte Tonsignal CT7. Das Bildfernsprechgerät Bife3 verarbeitet die Signale CB1,CT2. Die zuvor erläuterte Auswahl ist nur beispielhaft.

Neben dem Verteildienst ist eine sogenannte interaktive Steuerung des digitalen ISDN-Servers möglich. Im folgenden wird anhand von Figur 4 eine interaktive Steuerung für einen digitalen ISDN-Server näher erläutert. Dargestellt in der Figur 4 ist ein codiertes Bild- und Tonsignal, welches in mehreren Datenströmen DS1,DS2,DS3,DS4,DS5 abgelegt ist. Innerhalb der Datenströme DS1,DS2,DS3,DS4,DS5 sind sogenannte Intra-Frames vorgesehen. Intra-Frames enthalten als Bildinhalt ein vollständiges Bild, wohingegen bei den Inter-Sequenzen lediglich die Änderungen des neuen Bildes im Verhältnis zu dem vorangegangenen Bild übertragen werden. Die einzelnen Datenströme über die Zeit gesehen verfügen beispielsweise im Datenstrom 1 DS1 über einen ersten Intra-Frame bei 0 Sekunden, über einen zweiten Intra-Frame bei 30 Sekunden und über einen dritten Intra-Frame bei 60 Sekunden. In Datenstrom 2 DS2 ist ein Intra-Frame nach 5 Sekunden, ein zweiter Intra-Frame nach 35 Sekunden dargestellt. Im Datenstrom 3 DS3 ist ein erster Intra-Frame nach 10 Sekunden und ein zweiter Intra-Frame nach 40 Sekunden dargestellt. Im Datenstrom 4 DS4 ist ein erster Intra-Frame nach 15 Sekunden und ein zweiter Intra-Frame nach 45 Sekunden dargestellt. Demgemäß unterscheiden sich die Datenströme DS1 bis DS4 durch die Plazierung der Intra-Frames, also der Intra-codierten Bilder. In dem Datenstrom 5 DS5 sind sogenannte Standbilder vorhanden. Das bedeutet, daß Intra-codierte Bilder in zeitgeraffter Form kurz aufeinander folgend vorgesehen sind. Es können aber auch Intra-codierte Bilder mit nachfolgenden kurzen Inter-codierten Videosequenzen vorgesehen sein. Die Positionen der Intra-Frames in den unterschiedlichen Datenströmen DS1 bis DS4 und DS5 werden in Index-Dateien gespeichert. Die Intra-Frames ermöglichen ein Aufsetzen im codierten Datenstrom an diese Stelle, da in ihnen ein kompletter Bildinhalt vorhanden ist. Auch ein Mehrfachzugriff einzelner Teilnehmer auf einen der Datenströme DS1 bis DS4 erfolgt an der Stelle der Intra-Frames, damit ein vollständiger Bildinhalt vorhanden ist. Wird in der Intra-Sequenz aufgesetzt, dann muß bis zum nächsten Intra-Bild gewartet werden, um wieder einen vollständigen Bildinhalt zur Verfügung zu haben. Der Datenstrom 5 DS5 setzt sich, wie bereits erläutert, aus kurz hintereinander folgenden Intra-codierten Bildern und Intercodierten Sequenzen zusammen. Von den einzelnen Datenströmen DS1 bis DS4 aus wird auf den Datenstrom 5 DS5 verzweigt. Zur Realisierung des schnellen Vor- oder Rücklaufs wird von dem Datenstrom 1 DS1 bis zu dem Datenstrom 4 DS4 auf den Datenstrom 5 DS5 verzweigt und in die entsprechende Richtung gespult. Zum normalen Weiterlaufen wird der Datenstrom 5 DS5 wiederum verlassen und auf den dazu passenden Datenstrom zurückgesprungen. Dazu passend heißt, daß zu dem am nächsten liegenden Intra-Frame bzw. dessen Datenstrom gesprungen wird.

Im folgenden wird dies anhand eines Ausführungsbeispiels und der Figur 4 näher erläutert. Die einzelnen Datenströme DS1 bis DS5 sind, wie zuvor erläutert, angeordnet. Ein Teilnehmer wünscht nun beispielsweise in dem Datenstrom vorzuspulen VSP. Dazu wird aus dem Datenstrom, in dem er sich gerade befindet, auf den Datenstrom 5 DS5 verzweigt. Beispielsweise wird vom Datenstrom 2 DS2 zum Zeitpunkt t = 13 Sekunden auf den Datenstrom 5 DS5 verzweigt, das heißt, auf nächsten Intra-Frame. Nun wird vorgespult und beispielsweise bei der Zeit t = 42 Sekunden angehalten. Von hier aus soll der Datenstrom weiter abgefragt werden. Der zeitlich als nächstes kommende Intra-Frame liegt bei 45 Sekunden im vierten Datenstrom DS4.

Das Zurückspulen erfolgt in ähnlicher Weise und ist durch die Zeichnung RSP angedeutet.

Dazu wird hierbei zu einem beliebigen Zeitpunkt aus einem der Datenströme DS1 bis DS4 ausgestiegen, auf den Datenstrom DS5 gesprungen und zurückgespult. Nachdem zurückgespult wurde, wird wieder auf einen der Datenströme DS1 bis DS4 zurückgesprungen, und zwar genau auf denjenigen Datenstrom, dessen Intra-Frame der Zurückspringposition als nächste folgt. Das Vor- und Zurückspulen innerhalb eines Datenstromes wird durch Signalisierung von dem Bildfernsprechgerät aus initialisiert. Dies kann beispielsweise mittels Tonwahl, genauer gesagt DTMF-Tonwahl (Dual-Tone-Multi-Frequency) erfolgen. Als weitere Ausgestaltung kann vorgesehen werden, dies im ISDN-Datenstrom vorzusehen.

## Patentansprüche

1. Digitaler ISDN-Video-Server, zur Bereitstellung von Datenströmen aus codierten Bild- und Tonsignalen (CB1,CB2,...,CBm,CT1,CT2,...,CTn) für Bildtelefone unterschiedlicher Ausgestaltung,
mit einer Vielzahl von Videocodern (VC1,VC2,.....,VCm) und mit einer Vielzahl von Audiocodern (AC1,AC2,.....,ACn) zur Echtzeitcodierung von uncodierten Bild- bzw. Tonsignalen (B,T) zur Bereitstellung der codierten Bild- und Tonsignale (CB1,CB2,...,CBm,CT1,CT2,...,CTn) in unterschiedlichen Formaten
mit einer Vermittlungseinheit (V) zur Durchführung einer Netzwerksignalisierung und zur Herstellung jeweils einer Verbindung zwischen den Bildtelefonen unterschiedlicher Ausgestaltung und dem digitalen ISDN-Video-Server,
mit Mitteln (TN1,....,TNp) zur Signalisierung jeweils eines Bildtelefons zur Bestimmung der von den jeweiligen Bildtelefonen verarbeitbaren codierten Bild- und Tonsignalen (CB1,CB2,...,CBm,CT1,CT2,...,CTn) und zum Multiplexen oder Demultiplexen der codierten Bild- und Tonsignale jeweils für ein Bildtelefon und zur Durchführung einer Fehlerkorrektur jeweils für ein Bildtelefon,
mit einem Koppelfeld (AV-V) zum Schalten der codierten Bild- und Tonsignale (CB1,CB2,...,CBm,CT1,CT2,...,CTn) auf die Mittel zur Signalisierung (TN1,....,TNp)
und mit einer Steuerung (S) zur Steuerung der Bereitstellung des Datenstromes von dem digitalen ISDN-Video-Server für die Bildtelefone unterschiedlicher Ausgestaltung über die Mittel (TN1,...,TNp) zur Signalisierung.

2. Digitaler ISDN-Video-Server nach Anspruch 1, mit einem Audio-/Videospeicher (A/V-S) zur Bereitstellung gespeicherter, codierter Bild- und Tonsignale (CB1',CB2',...,CBm',CT1',CT2',...,CTn') unterschiedlicher Formate.

3. Digitaler ISDN-Video-Server nach Anspruch 2, bei dem die von der Vielzahl von Videocodern (VC1,VC2,.....,VCm) und der Vielzahl von Audiocodern (AC1,AC2,.....,ACn) in Echtzeit bereitgestellten Signale (CB1,CB2,...,CBm,CT1,CT2,...,CTn) in dem Audio-/Videospeicher (A/V-S) gespeichert werden.

4. Digitaler ISDN-Video-Server nach Anspruch 2 oder 3, bei dem die Steuerung als interaktive Steuerung ausgebildet ist, bei dem jeweils die codierten Bild- und Tonsignale (CB1,CB2,...,CBm,CT1,CT2,...,CTn) in mehreren Datenströmen (DS1,DS2,DS3,DS4,DS5) abgelegt sind und bei dem in jedem der Datenströme (DS1,DS2,DS3,DS4,DS5) unterschiedlich plazierte Intra-Frames zum Neustart der Codierung angeordnet sind, zum Ausführen der Funktion des Vorspulens und des Zurückspulens innerhalb des codierten Datenstromes.

5. Digitaler ISDN-Server nach Anspruch 4, bei dem ein Mehrfachzugriff einzelner Teilnehmer auf einen Datenstrom über die Intra-Frames ermöglicht wird.

6. Digitaler ISDN-Server nach einem der Ansprüche 1 bis 5, bei dem eine Datenstromauswahl und eine Steuerung mittels Tonwahl oder mittels Signalisierung im B-Kanal erfolgt.

7. Verwendung des digitalen ISDN-Servers nach einem der vorhergehenden Ansprüche zur Realisierung eines Verteildienstes.

8. Verwendung des digitalen ISDN-Servers nach einem der vorhergehenden Ansprüche zur Realisierung eines interaktiven Dienstes.
